(19) **Europäisches Patentamt / European Patent Office / Office européen des brevets**

(11) **EP 1 634 426 B1**

(12) **EUROPEAN PATENT SPECIFICATION**

(45) Date of publication and mention of the grant of the patent:
**08.07.2009 Bulletin 2009/28**

(21) Application number: **04776112.7**

(22) Date of filing: **26.05.2004**

(51) Int Cl.:
**H04L 29/06** (2006.01)

(86) International application number:
**PCT/US2004/016464**

(87) International publication number:
**WO 2005/002175 (06.01.2005 Gazette 2005/01)**

(54) **Selectively managing data conveyance between computing devices**

Selektive Verwaltung der Datenübermittlung zwischen Datenverarbeitungseinrichtungen

Gestion sélective de l'acheminement de données entre des dispositifs de calcul

(84) Designated Contracting States:
**AT BE BG CH CY CZ DE DK EE ES FI FR GB GR HU IE IT LI LU MC NL PL PT RO SE SI SK TR**

(30) Priority: **30.05.2003 US 449844**

(43) Date of publication of application:
**15.03.2006 Bulletin 2006/11**

(73) Proprietor: **SAP AG**
**69190 Walldorf (DE)**

(72) Inventor: **BAYYAPU, Pavan**
**Sunnyvale, CA 94085 (US)**

(74) Representative: **Müller-Boré & Partner**
**Patentanwälte**
**Grafinger Strasse 2**
**81671 München (DE)**

(56) References cited:
**US-A- 5 862 325**          **US-A- 6 138 009**
**US-A1- 2003 050 955**

**Description**

BACKGROUND

The present application describes systems and techniques relating to managing data conveyance between devices such as computing devices.

In general, a client may be updated to receive new data from a server in either of two ways. First, a browser (or other client-side application) may intermittently ask the server for new data (often referred to as "pulling" data). Second, the server may send new data to the client as the data becomes available (often referred to as "pushing" data).

Document US 5,862,325 discloses an automated communications system which operates to transfer data, metadata and methods from a provider computer to a consumer computer through a communications network. A communications object architecture is provided which makes it easy for a provider to convert a communications object from push to pull updating and vice versa. In certain cases it might be advantageous to combine both the push and pull techniques of updating for a single communications object. For example a provider may wish to use pull-updating for distribution of a monthly newsletter but also wish to be able to distribute an update via the push technique when very timely news occurs such as a special event.

The invention provides a method, a system and an article comprising a machine-readable medium storing instructions as defined by independent claims 1,13 and 21, respectively.

Details of one or more implementations are set forth in the accompanying drawings and the description below. Other features and advantages may be apparent from the description and drawings, and from the claims.

BRIEF DESCRIPTION OF THE DRAWINGS

These and other aspects will now be described in detail with reference to the following drawings.

FIG. 1 shows a block diagram of a system for selectively managing data conveyance between computing devices.

FIG. 2 shows a block diagram of a data acquisition device.

FIG. 3 shows a block diagram of a data distribution device.

FIG. 4 shows a block diagram of a logic framework for selectively managing data conveyance between computing devices.

FIGs. 5A-B show a flow chart illustrating a process for selectively managing data conveyance between computing devices.

FIGs. 6A-B show a flow chart illustrating a process for selectively managing data conveyance between computing devices.

Like reference symbols in the various drawings indicate like elements.

DETAILED DESCRIPTION

The systems and techniques described here relate to managing data conveyance between computing devices. In particular, the described systems and techniques relate to selecting an appropriate service by which to convey data between computing devices and for implementing the selected service.

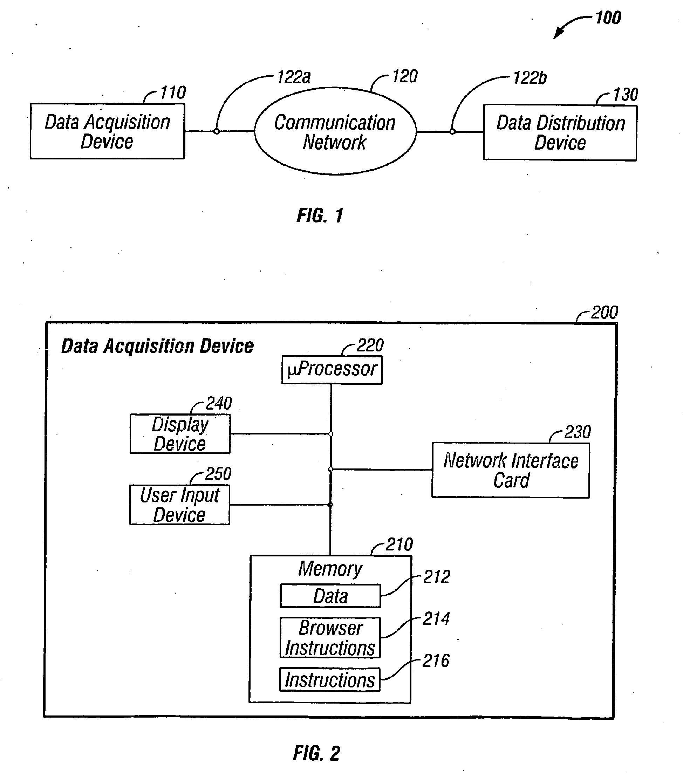

FIG. 1 illustrates a system 100 for selectively managing data conveyance between computing devices. In general, system 100 includes a data acquisition device 110, a communication network 120, and a data distribution device 130. In operation, data distribution device 130 is receiving and/or generating data that may be of interest to data acquisition device 110. To convey the data to data acquisition device 110, however, data distribution device 130 and data acquisition device 110 must understand how the data is to be conveyed.

Data acquisition device 110 includes devices for facilitating the storage, manipulation, and conveyance of data. For example, device 110 may include memory, which may include random-access memory (RAM), read-only memory (ROM), compact-disk read-only memory (CD-ROM), registers, and/or any other appropriate volatile or non-volatile information storage device. The memory may store the conveyed data, instructions for the data acquisition device, the state of the data acquisition device, and/or any other appropriate information. The conveyed data may be text, audio, graphics, video, statistics, measurements, and/or any other appropriate information. As another example, the device may include a processor, such as, for example, an analog processor, a digital processor, a biological processor, an atomic processor, or any other appropriate device for manipulating information in a logical manner. As a further example, the device may include a communication interface, such as, for example, a network interface card, a modem, a wireless transceiver, or any other appropriate device for sending and/or receiving information. The data acquisition device may also include a user input device and/or a user output device. In particular implementations, device 110 may be a personal digital assistant (PDA), a personal computer (PC), a workstation (WS), or any other appropriate computing device.

Note that although data acquisition device 110 is illustrated as being remote from data distribution device 130, device 110 is only "remote" in the sense that it is not physically part of data distribution device 130. Thus, data acquisition device 110 may be geographically close to or far from data distribution device 130.

Data acquisition device 110 and data distribution device 130 are coupled to communication network 120 by links 122. Links 122 may be metallic wire, such as for example, twisted-pair wire or coaxial cable, fiber-optic cable, electromagnetic wireless channels, such as, for example, an IEEE 802.11 channel, a Bluetooth™ channel, a cellular channel, or an infrared channel, and/or any other appropriate type of wireline or wireless path for transferring information.

Communication network 120 may include any.appropriate types of devices for conveying data from data distribution device 130 to data acquisition device 110. For example, network 120 may include bridges, routers, switches, servers, repeaters, transceivers, and/or hubs. Furthermore, these components may use wireline and/or wireless techniques. In general, network 120 may be any type of communication network, such as, for example, a frame relay network, an X.25 network, the Internet, or the Public Switched Telephone Network (PSTN). Note that communication network 120 may convey data between a variety of devices such as telephones, PCs, servers, and WSs contemporaneously with conveying data from data distribution device 130 to data acquisition device 110.

Data distribution device 130 includes devices for storing, manipulating, and conveying the data to be conveyed to device 110. For example, data distribution device 130 may include memory, which may include RAM, ROM, CD-ROM, registers, and/or any other appropriate volatile or non-volatile information storage device. The memory may store the data to be conveyed, instructions for the data distribution device, the state of the data acquisition device, and/or any other appropriate information. The data may be created by device 130, received through communication network 120 from other devices, or otherwise captured at data distribution device 130. As another example, device 130 may include a processor, such as, for example, an analog processor, a digital processor, a biological processor, an atomic processor, or any other appropriate device for manipulating information in a logical manner. As a further example, device 130 may include a communication interface, such as, for example, a network interface card, a modem, a transceiver, or any other appropriate device for sending and/or receiving information. In particular implementations, device 130 may be a server and enter into a client-server relation with data acquisition device 110.

In one mode of operation, when data acquisition device 110 determines that data is desired by a process, the device generates a message including a subscription request. The process may be a user command, an application, a hard-wired data gathering scheme, or any other appropriate technique. Furthermore, the subscription request may be any appropriate type of request for a data service. The subscription request may, for example, include information about the desired data, such as, for instance, type and/or location. In particular implementations, the subscription request may be a HyperText Transfer Protocol (HTTP) request with the responsive data subject as an HTTP parameter. Moreover, in certain implementations, an HTTP parameter could specify the preferred type of data service. The data acquisition device then sends the subscription request message to communication network 120, which conveys the message to data distribution device 130. Note that a message may have one or more segments and/or be a part of a larger message.

Upon receiving the subscription request, data distribution device 130 selects a type of service to use to provide data in response to the subscription request. In general, the distribution device may select between a data push service and a data pull service. For a data push service, data distribution device 130 maintains a persistent connection with data acquisition device 110 and sends new data to the data acquisition device without waiting for a request from the data acquisition device. For a data pull service, on the other hand, data distribution device 130 waits for data acquisition device 110 to request new data before sending the new data. The data push/pull services may be implemented using Java and Java Server Pages (JSPs) or any other appropriate type of language/protocol.

A data pull service has several advantages. For example, a data pull service does not need a persistent connection; a connection can be set up each time data is to be conveyed. Furthermore, the service should work even if there are buffering proxy servers between the data acquisition device and the data distribution device. Additionally, the service may be implemented on a "thin" client, allowing little impact on the data acquisition device, and may be implemented using HTTP, allowing the service to be portable across different brands of browsers.

A data pull service does have drawbacks, however. For example, overhead is consumed, in terms of processing, time, or both, each time a connection is established to convey data. Moreover, this may require substantial overhead if the data acquisition device is requesting data on a frequent basis. On the other hand, if data is not requested at a high enough frequency, the data distribution device may have to store large amounts of data for the data acquisition device for extended periods of time. As another example, the data acquisition device may not get data responsive to the subscription request as soon as the data becomes available.

A data push service has advantages and disadvantages too. On the positive side, a data push service allows the data acquisition device to be notified as soon as responsive data becomes available at the data distribution device. Also, if a browser is used, a "thin" client may be used because a browser typically does not need to download other components to look after its maintenance. Furthermore, if an HTTP connection is used, the connection should be portable across different browsers. On the negative side, the number of socket connections at the data distribution device may limit the number of persistent connections available, and buffering proxy servers may cause problems with the connection.

The type of service to select is based on a current state of the data distribution device and one or more attributes of the subscription request, which could reflect attributes of data responsive to the subscription request. A state of the data distribution device is based on the number of connections available at the data distribution device, the amount of data being handled by the data distribution device, and/or the number of data acquisition devices being served by the data distribution device. Attributes of the subscription request may include the type of data acquisition device requesting data service, a specification of the preferred type of data service, attributes of the responsive data, and/or any other appropriate criterion that may be derived from a subscription request message. Attributes of the responsive data may include the type of data, the quality of service (QOS) desired for the data, the estimated availability frequency of new data for the service, and/or the amount of data for the service. In particular implementations, however, a non-data attribute such as a user identifier or a device identifier may be used in place of a data attribute, although the non-data attribute may reflect a data attribute.

Selecting a service, therefore, may depend on a variety of factors. For example, if the data distribution device already has a large number of connections established, and the subscription does not require a persistent connection, the device may decide to establish a data pull service. As another example, if the data distribution device estimates that the data acquisition device will often try to pull data from the data distribution device, a data push service may be established. As a further example, if a high QOS is desired, a data push service may be used. In particular implementations, the data distribution device may try to convert an already existing data push service to a data pull service to accommodate a request for which a data push service should be provided.

If data distribution device 130 decides to use a data pull service, the data distribution device sends a message regarding the selected service to the data acquisition device. The message may specify the data service type. Furthermore, the message may specify whether acknowledgment is required. If acknowledgement is required, the data acquisition device may report back to the data distribution device. The data distribution device and the data acquisition device may also negotiate any appropriate parameters.

Then, data conveyance occurs when the data acquisition device requests new data from the data distribution device, typically at the expiration of a refresh interval. If there is new data that is responsive to the subscription request when the data acquisition device contacts the data distribution device, the data distribution device sends at least that data to the data acquisition device. If the data distribution device maintains the state of the data acquisition device, just the new data may be sent.

If the data distribution device decides to use a data push service, the data distribution device also sends a message regarding the selected service to the data acquisition device. The message may specify the selected data service type. Furthermore, the message may specify whether acknowledgment is required. If acknowledgement is required, the data acquisition device may report back to the data distribution device. The data distribution device and the data acquisition device may also negotiate any appropriate parameters.

In this case, however, the data acquisition device and the data distribution device maintain a persistent connection to convey the data, and the data distribution device sends new data that is responsive to the subscription request to the data acquisition device as the data becomes available. In particular implementations, the data acquisition device provides a handle, sometimes referred to as a response object in servlet technology, to push the information. Furthermore, if the data distribution device maintains the state of the data acquisition device, the data distribution device may just send the new responsive data; this may be viewed as a streaming approach because the data is sent as a flow. To try to mollify the potential buffering-proxy-server problem, the data distribution device may include dummy data with the actual data to try to match the size of the proxy server's buffers.

In implementations where the data distribution device maintains the state of the data acquisition device and, thus, is able to provide the data acquisition device with just new data, there may need to be a way to keep the data persistent across the roundtrips on the data acquisition device side. This may lead to a solution in which one frame of an interface keeps refreshing to obtain the new data, if any, and passing the obtained data to other interested frames. In a non-frame scenario, the data acquisition device may need to refresh the interface by retrieving the previously obtained data as well as the new data.

The system illustrated by FIG. 1 and described above may have a variety of features. For example, the data conveyance between computing devices may have the ability to adapt by using the best of the push/pull alternatives. As another example, the data conveyance may be easy to implement and extend. As a further example, the fusion of the push and pull technologies may make the callback technology more robust. Furthermore, if "thin" clients can be implemented, the data conveyance may be more portable across various browsers because difficulties involved with heavy clients, like applets, may be eliminated. Additionally, if implemented using HTTP, firewall blockage issues should be minimal. As a further example, only one persistent connection may be established per client.

The techniques described herein may be used for any type of scenario in which a data distribution device wants to update a data acquisition device periodically about new data. Examples of such scenarios include Web chat, stock quotes, dynamic auction applications, dynamic advertisement (e.g., pushing promotions to a user based on the user's profile and/or behavior), travel information updates, and Webinar (i.e., Web seminars).

In certain implementations, the refresh interval for a data pull service may be initially determined by the data distribution device and sent to the data acquisition device, possibly in the message regarding the selected service. Thus, the data acquisition device will know when to request data from the data distribution device. The refresh interval may be based on a state of the data distribution device and/or one or more attributes of the responsive data. Items to consider are the number of connections available at the data distribution device, the number of data acquisition devices being sourced by the data distribution device, the amount of data being handled by the data distribution device, network latency to and/or from the data distribution device, the quality of service (QOS) desired for the responsive data, the frequency at which responsive data is expected to become available at the data distribution device, the amount of responsive data that is expected to become available at the data distribution device, the overhead in setting up a connection, and/or any other appropriate criterion affecting the ability of the data distribution device to provide data.

For example, if the number of connections available at the data distribution device is high, the QOS for the responsive data is high, and/or the frequency at which the responsive data is expected to become available is high, the refresh interval may be short. On the other hand, if the number of connections available at the data distribution device is low, the QOS for the responsive data is low, and/or the frequency at which the data is expected to become available is low, the refresh interval may be long. For instance, if the frequency at which responsive data is expected to become available at the data distribution device is low, there is not much of a point in having a short refresh interval. Typically, in fact, the refresh interval should not be shorter than the data availability rate at the data distribution device. Of course, if different factors point in different directions, a balancing may occur.

Additionally, the refresh interval may be updated as responsive data becomes available at the data distribution device, to make the refresh interval reflect the rate at which responsive data is becoming available for the data acquisition device on the data distribution device side. Note that the specification of a lower limit and an upper limit for the refresh interval may be prudent, so that the tuning application cannot take excessive control of the situation. The refresh interval update may be implemented in any appropriate language.

As one example of tuning the refresh interval, let:

$Rinit$ = the initial refresh interval for the data acquisition device,
$Rmin$ = the allowed minimum refresh interval for the data acquisition device,
$Rmax$ = the allowed maximum refresh interval for the data acquisition device,
$Rn$ = the refresh interval at the end of n'th event, and
$En$ = the average interval at which events became available for the data acquisition device until n'th event,

then
$Rn+1$ = CF($En$, $Rn$), where CF is a convergence function.
Thus, in this approach, the weight given to the availability interval of every event is the same. In other implementations, though, there may be an approach in which events that are generated recently get precedence over the events generated earlier. Thus, more preference is given to the current trend.

One form of the convergence function (CF) may be:

$$CF(Rn+1) = avg(Rn\,, \max\{\max\{Rmin\,, En\}\,, \min\{Rmax\,, En\}\}).$$

The average is taken to slowdown converge of $Rn+1$ towards $En$.

There may also be a parameter to govern the convergence rate. For example, let $\alpha$ ($0<\alpha<1$) be the confidence level of the existing refresh rate $Rn$. The new refresh rate thus can be calculated as follows:

$$Rn+1 = CF(Rn+1) = (\alpha*Rn\, + (1-\alpha)\,*\max\{\max\{Rmin\,, En\}, \min\{Rmax\,, En\}\}).$$

Note that $Rinit$, $Rmin$, $Rmax$, and $\alpha$ can be tuned based on the requirements of the application.

By tuning the refresh interval, the data distribution device may strike a balance between update latency and overhead. Thus, for services in which responsive new data is available fairly often, the refresh interval may be shortened to allow for quicker transfer of the data to the data acquisition device. On the other hand, for services in which responsive new data is available at a slower frequency, the refresh interval may be lengthened to lower overhead in establishing connections, especially when there is no responsive new data. Additionally, the data distribution device may compensate for a service that experiences different data availability rates over time.

FIG. 2 illustrates a data acquisition device 200. Data acquisition device 200 may be similar to data acquisition device 110 in FIG. 1. As illustrated, data acquisition device 200 includes memory 210, a microprocessor 220, a network interface card 230, a display device 240, and a user input device 250.

Memory 210 may include RAM, ROM, CD-ROM, registers, and/or any other appropriate volatile or non-volatile information storage device. Memory 210 stores data 212, which may have been conveyed from a data distribution device, browser instructions 214, which dictate how data is to be displayed, and instructions 216, which dictate the lower level operations of the data acquisition device. Browser instructions 214 may be the Internet Explorer, the Netscape Navigator, or any other type of HTTP-based browser. Additionally, browser instructions 214 may be implemented for TCP/IP, TELNET, NTTP, or any other appropriate messaging protocol.

Microprocessor 220 may be a complex-instruction-set computer (CISC), a reduced-instruction-set computer (RISC), or any other appropriate device for manipulating information in a logical manner. Microprocessor 220 operates according to the instructions in memory 210.

Network interface card 230 may be an Ethernet card, an ATM card, or any other appropriate device for sending information to and receiving information from a communication network. Card 230 may operate in conjunction with or independent of microprocessor 220.

Display device 240, a type of user output device, may be a cathode ray tube (CRT) display, a liquid crystal display (LCD), a projector, or any other appropriate device for visually presenting information. Display device may present user interfaces generated by microprocessor 220.

User input device 250 may be a keypad, a keyboard, a touch screen, a trackpad, a mouse, a microphone, a stylus, and/or any other appropriate device for detecting input from a user. Through the user input device, a user may enter commands for the data acquisition device.

In one mode of operation, microprocessor 220 generates a user interface according to browser instructions 214. Display device 240 then visually presents the user interface to a user. The microprocessor then determines whether data is desired and, if so, generates a subscription request. Determining that data is desired may be accomplished by detecting a user command indicating that a certain type of data is desired, determining that an application needs a certain type of data, or by any other appropriate technique. The subscription request may contain indicia regarding the data acquisition device, the requesting user, the type of data that is desired, the source of the data, and/or any other appropriate information. The request may then be sent through network interface card 230 to a data distribution device.

The data acquisition device then waits to receive a message through network interface card 230 regarding the selected service for providing the data. After such a message has been received, microprocessor 220 determines whether the selected service is a data pull service or a data push service.

If the selected service is a data push service, microprocessor 220, possibly with the assistance of network interface card 230, establishes a persistent connection with the serving data distribution device. The microprocessor then waits to receive new responsive data through network interface card 230. Once the data has been received, the microprocessor updates data 212. Furthermore, the microprocessor may update the user interface presented by display device 240 with the new data. The data acquisition device may continue to receive new responsive data and update the existing data until the microprocessor decides to break the connection or the connection is broken by the serving data distribution device.

If, however, the service is a data pull service, microprocessor 220 waits for a refresh interval to expire. The refresh interval may have been received in the message regarding the selected service. Once the refresh interval has expired, the microprocessor generates a message requesting new data and sends the message through network interface card 230 to the serving data distribution device. The data acquisition device then waits to receive a message containing new data and a new refresh interval, if any. After receiving the message, the microprocessor updates data 212, and begins waiting for the new refresh interval to expire. The microprocessor may also update the user interface presented by display device 240 with the new data.

In certain implementations, the browser may have a hidden frame that acts as a mediator between the browser interface and the data distribution device. The hidden frame may have the ability to interpret the requests generated because of user actions and the responses sent by the data distribution device.

It should be understood that FIG. 2 only illustrates one implementation of a data acquisition device. Other data acquisition devices may have less, more, and/or a different arrangement of components. For example, a data acquisition device may not have a user input device or a display device. As another example, a data acquisition device may include additional applications in memory 210. Moreover, some of the instructions may be encoded on microprocessor 220. In addition, the applications and/or data in memory 210 may have a variety of segments.

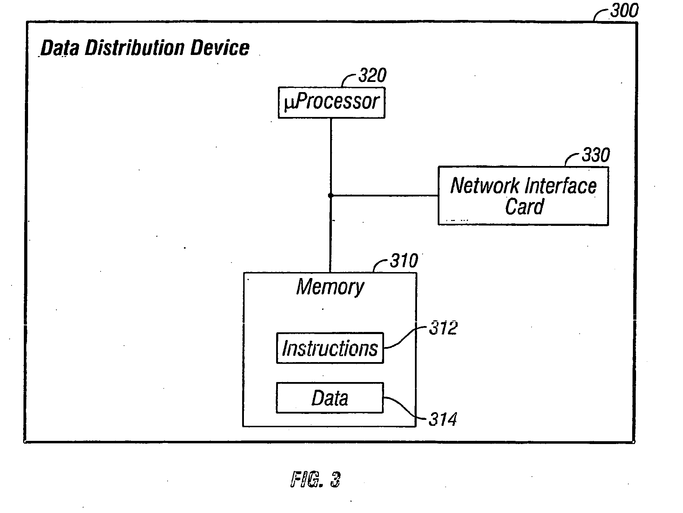

FIG. 3 illustrates a data distribution device 300. Device 300 may be similar to data distribution device 130 in FIG. 1. As illustrated, data distribution device 300 includes memory 310, a microprocessor 320, and a network interface card 330.

Memory 310 may include RAM, ROM, CD-ROM, registers, and/or any other appropriate volatile or non-volatile information storage device. Memory 310 stores instructions 312, which dictate the lower level operations for the device, and data 314, which may include responsive data.

Microprocessor 320 may be a CISC, a RISC, or any other appropriate device for manipulating information in a logical manner. Microprocessor 320 operates according to the instructions in memory 310.

Network interface card 330 may be an Ethernet card, an ATM card, or any other appropriate card for sending information to and receiving information from a communication network. Card 330 may operate in conjunction with or independent of microprocessor 320.

In one mode of operation, device 300 waits to receive a message including a subscription request through network interface card 330. After receiving a subscription request, microprocessor 320 selects a type of service to fulfill the subscription request. Selecting a service type may entail analyzing a state of device 300 and/or one or more attributes of the data responsive to the subscription request. The device may determine attributes of the responsive data based on the subscription request. Items to consider may include the number of connections currently available at the device, the QOS desired for the responsive data, and/or the latency in the communication network. For example, if a high QOS is desired, a push service may be appropriate. On the other hand, if a data push service may not be used, but a data pull service is acceptable, a data pull service may be used. If a data pull service is to be used, microprocessor 320 also determines an initial refresh interval.

After selecting what type of service to use, microprocessor 320 generates a message regarding the selected service. The message may then be sent through network interface card 330 to the data acquisition device that initiated the subscription request. After this, any other negotiations between device 300 and the initiating data acquisition device regarding the service may be accomplished.

If the service is a data pull service, microprocessor 320 determines whether new data has become available. Data may become available, for example, by being received through network interface card 330. If data has become available, microprocessor 320 determines whether the data is responsive to the subscription request. Data may be responsive to the subscription request if the data is from a pre-designated source, pertains to certain subject matter, has an identifier for the initiating data acquisition device, and/or has any other appropriate attribute. If the data is responsive to the subscription request, microprocessor 320 causes the data to be stored in data 314. Additionally, microprocessor 320 recalculates the refresh interval. The refresh interval may, for example, be recalculated based on the time interval between receiving new data that is responsive to the subscription request.

Microprocessor 320 also determines whether a pull request has been received through network interface card 330. If a pull request has been received, microprocessor 320 determines whether any responsive new data has become available since the last request and, if so, generates a message containing the data and the updated refresh interval. The message may then be sent through network interface card 330.

Device 300 may repeatedly determine whether new data is available, determine whether the new data is responsive, store the new data if it is responsive, and send the stored data to the initiating data acquisition device in response to a pull request.

If, on the other hand, the selected service is a data push service, the microprocessor, possibly with the help of network interface card 330, establishes a persistent connection with the initiating data acquisition device. The microprocessor also determines whether data has become available and, if so, determines whether the data is responsive. If responsive new data is available, the microprocessor generates a message including the data. The message is then sent through network interface card 330 to the data acquisition device that initiated the subscription request.

Device 300 may repeatedly determine whether new data is available, determine whether the available data is responsive, and the send responsive new data to the initiating data acquisition device.

It should be understood that FIG. 3 only illustrates one implementation of a data distribution device. Other data distribution devices may have less, more, and/or a different arrangement of components. For example, a data distribution device may include a user input device and/or a user output device. As another example, a data distribution device may have some or all of the instructions encoded on the processor. As an additional example, a data distribution device may include additional applications in memory 310. Moreover, the applications and/or data in memory 310 may have a variety of segments.

In particular implementations, instructions 312 contain a subscriber module for registering a subscription request and a publisher module for sending data to the initiating data acquisition device. Upon receiving a subscription request, the subscriber module registers the request, which may include the subject of the data acquisition device's interest, an identifier for the data acquisition device, and/or a handle to push data, with the publisher. When a new event is available, such as data or a shutdown, the publisher pushes the event to the client by using JavaScript methods containing objects that include text. An event may be generated by scheduled event generators or other applications. The data acquisition device may then interpret the objects and, if appropriate, present text to the user. Other techniques may also be used.

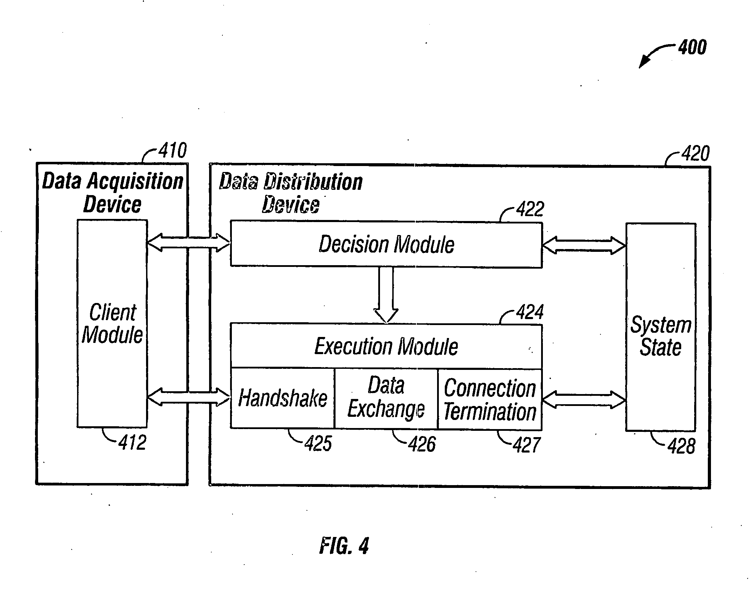

FIG. 4 illustrates a logic framework 400 for selectively managing data conveyance between computing devices. As illustrated, framework 400 is for a client-server model of a data acquisition device 410 and a data distribution device 420.

The development and functionality of framework 400 may be classified into three modules - a client module 412, a decision module 422, and an execution module 424. Client module 412 provides the functionalities of the client in the client-server architecture. Thus, client module 412 may hold the mechanisms for connecting to the server and the knowledge to interpret the responses sent by the server. In most implementations, the client is a Web-browser. Thus, client module 412 may hold the JavaScript to handle the interpretation process.

Decision module 422 and execution module 424, in turn, categorize the work on the server side, i.e., at data distribution device 420. Execution module 424 includes a handshake function 425, a data exchange function 426, and a connection termination function 427. These functions perform operations for execution module 424. In framework 400, the server side also stores the system state 428.

In operation, based on a current state of the system and at least one attribute of the data the client is requesting, decision module 422 determines whether a client should be admitted for service. If the service to the client is granted, then the request is passed on to execution module 424 for providing the type of service. Otherwise, the client will be notified with an error message.

Execution module 424 may use handshake function 425 to determine if the client may be handled with a data push service. If the handshake is unsuccessful, the module will try to service the client with a data pull service. This sequence may occur because a handshake typically involves an acknowledge from the data acquisition device after it receives the initial service type message. If the data distribution device does not receive the acknowledgement, this tells the device that the data was probably lost or buffered in the proxies and that a data push service may not be the best approach. Thus, the data distribution device may change the service type to pull and resend the initial service type message to the data acquisition device.

In particular implementations, the future load on the data distribution device may also be taken into account. For example, the data distribution device may know at which hours of the day a high or low load occurs. Thus, if a subscription request arrives just before one of those times, the data distribution device may make a different determination as to what type of service is to be provided.

After data exchange function 426 finishes with the data conveyance, or when data conveyance is to be terminated, connection termination function 427 releases the resources used for the service. Connection termination may originate from the data acquisition device or the data distribution device.

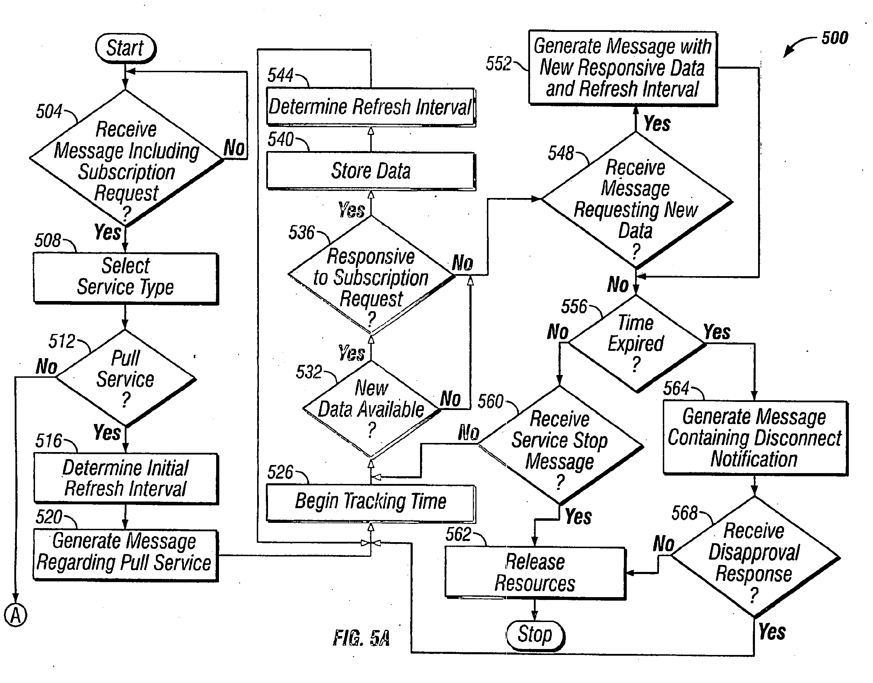

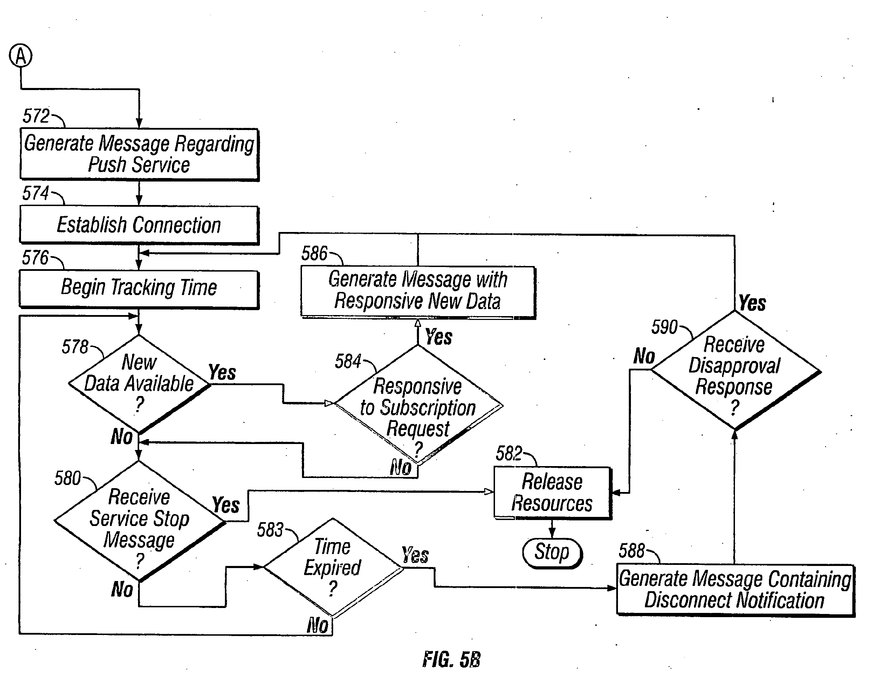

FIGs. 5A-B illustrate a process 500 for selectively managing data conveyance between computing devices. Process 500 may be implemented by a data distribution device similar to data distribution device 130 in FIG. 1.

The process begins with waiting to receive a message including a subscription request at decision block 504. The subscription request may contain an indication of a data source, the type of data desired, the type of application for which the data is desired, and/or any other appropriate information regarding responsive data for the subscription. The subscription request may, for example, be a URL with a text message having tags that define the data.

After a subscription request has been received, the process calls for selecting a type of service to fulfill the subscription request at function block 508. Selecting a service type may entail analyzing a current state of the data distribution device and/or at least one attribute of the responsive data. Items that may be considered include the number of connections currently available, the QOS desired for the responsive data, and/or network latency. Furthermore, the number and/or type of data services currently being handled may be considered. If a data push service may not be used, but a data pull service is acceptable, a data pull service may be used.

After selecting what type of service to use, the process calls for determining whether the service is a data pull service at decision block 512. If the service is a data pull service, the process continues with determining an initial refresh interval for the service at function block 516. The initial refresh interval may be determined based on an expected availability rate of responsive data, an expected amount of responsive data to become available, the overhead in setting up and disconnecting a connection to convey the data, and/or any other appropriate criteria. In particular implementations, however, the initial refresh interval may be a default value.

After determining the initial refresh interval, the process calls for generating a message regarding the data pull service at function block 520. The message may contain at least some of the parameters for the service, including the initial refresh interval. The message may then be sent to the data acquisition device that initiated the subscription request.

The process continues with beginning to track time at function block 526. Time may be tracked by establishing a timer, by recording the current time, or by any other appropriate technique. The process then calls for determining whether new data is available at decision block 532. The data maybe text, graphics, audio, video, measurements, statistics, or any other appropriate type of information, and may have been received and/or generated at a data distribution device. If new data is available, the process calls for determining whether the data is responsive to the subscription request at decision block 536. Data may be responsive if the data is from a pre-designated source, regards certain subject matter, and/or has any other appropriate characteristics. If the data is responsive, the process continues with storing the data so that the data is associated with the subscription request at function block 540 and recalculating the refresh interval at function block 544. The refresh interval may, for example, be recalculated based on the time interval between receiving responsive new data. After this, the process calls for returning to function block 526, to reinitiate the time tracking process.

If, however, no new data is available, or new data is not responsive, the process calls for determining whether a message requesting data has been received at decision block 548, the request indicating that responsive data that has become available since the last data request should be sent. Note that a connection is typically established before the data request is received. If a data request has been received, the process continues with generating a message with the new data and refresh interval, if any, at function block 552. The message may then be sent to the data acquisition device that initiated the subscription request.

Once the message has been generated, or if a data request has not been received, the process calls for determining whether a predetermined amount of time has expired at decision block 556, the amount of time being indicative of the period since last receiving responsive new data. This time period may be hard-coded or updated, and is generally on the order of minutes. If the predetermined amount of time has not expired, the process calls for determining whether a message indicating that the service should be stopped has been received at decision block 560. If a service stoppage message has been received, the resources for the selected service are released at function block 562, and the process is at an end. But if a service stoppage message has not been received, the process returns to check for data at decision block 532.

If, however, the predetermined amount of time has expired at decision block 556, the process calls for generating a message containing a disconnect notification at function block 564. The message may then be sent to the data acquisition device that initiated the subscription request. After sending the disconnect notification, the process calls for determining whether a message including a disapproval response has been received at decision block 568. If a disapproval response has been received, the process calls for keeping the resources active and returning to function block 526. If, however, a disapproval response has not been received, the resources for the service are released at function block 562, and the process is at an end. A predetermined period of time, such as, for example, five minutes, may be allowed to expire before ending the process.

Returning to decision block 512, if the selected service is not a data pull service, the process calls for generating a message regarding the push service at function block 572. The message may include at least some of the parameters for the service. The message may then be sent to the data acquisition device that initiated the subscription request. The process then calls for establishing a persistent connection at function block 574.

After establishing the connection, the process calls for beginning to track time at function block 576. The process then calls for determining whether new data is available at decision block 578. If new data is not available, the process calls for determining whether a service stoppage message has been received at decision block 580. If a service stoppage message has been received, the resources for the service are released at function block 582, and the process is at an end. But if a service stoppage message has not been received, the process continues with determining whether a predetermined amount of time has expired at decision block 582, the amount of time corresponding to the interval since last receiving responsive new data. If the predetermined amount of time has not expired, the process calls for returning to decision block 578 to check for new data.

When new data is available, the process calls for determining whether the data is responsive to the subscription request at decision block 584. If the data is not responsive, the process calls for returning to decision block 580 to check for a service stoppage message. If, however, the data is responsive, the process calls for generating a message with the new data at function block 586. The message may then be sent to the data acquisition device that initiated the subscription request. The process then calls for returning to function block 576 to reinitiate the time tracking.

If the predetermined amount of time has expired at decision block 582, the process calls for generating a message containing a disconnect notification at function block 588. The message may then be sent to the data acquisition device that initiated the subscription request. The process then continues with determining whether a message including a disapproval response has been received at decision block 590. If a disapproval response has been received, the process calls for returning to function block 576. If, however, a disapproval response has not been received, the resources for the service are released at function block 582, and the process is at an end.

Although FIGs. 5A-B illustrate a process for selectively managing the conveyance of data between computing devices, other implementations may have more have less, more, and/or a different arrangement of operations. For example, a process may not contain the operations regarding the data push service. As another example, a process may not update the refresh interval. As an additional example, time tracking may begin after determining the service type, after initially receiving some responsive data, or at another appropriate time. As a further example, the new data and the refresh interval may be in different messages. As a another example, a data distribution device may have multiple services active at one time. Thus, data becoming available may have to be checked for applicability to multiple services and associated accordingly.

As an additional example, a request to stop the service may come from somewhere other than the data acquisition device. A service provider, for instance, may request that the data distribution device end the service with the data acquisition device. This may occur, for example, in a chat scenario, when the user closes the chat, the chat application may request the data distribution device to end the service with that specific user.

As a further example, selecting a service type may include sending an acknowledge request. If a response to the acknowledge request is not received, it may indicate that a data push service is not appropriate. Intervening servers, for instance, might be capturing messages initiated by a data distribution device. A data distribution device may use this in deciding whether to use a data push service or a data pull service.

An acknowledge request may also be used during data service. If no response is received, a data distribution device could determine that a connection has failed. Furthermore, the data distribution device could decide to switch a data push service to a data pull service, to end the data service, or otherwise. The acknowledge request could be issued upon the occurrence of certain events, at designated times, or otherwise.

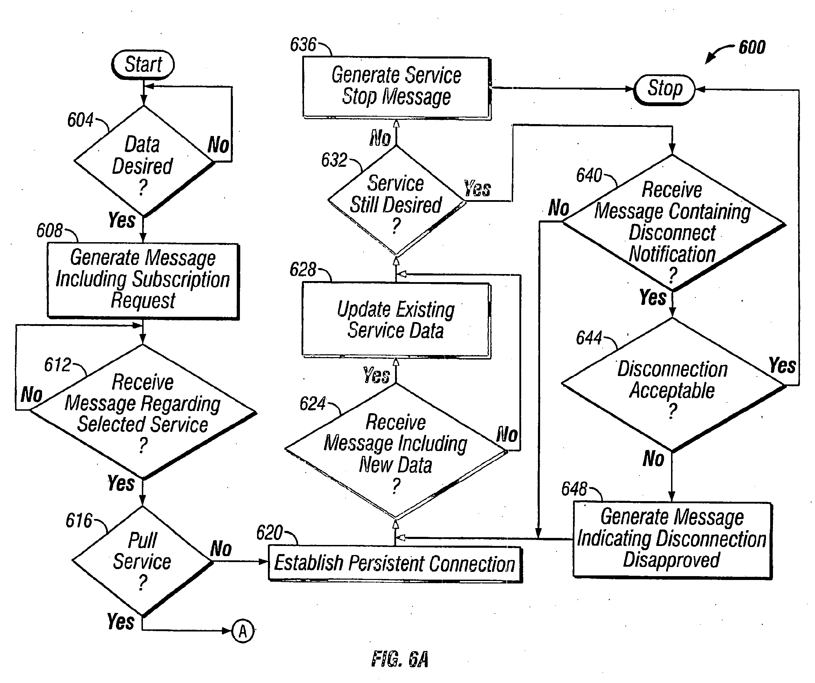

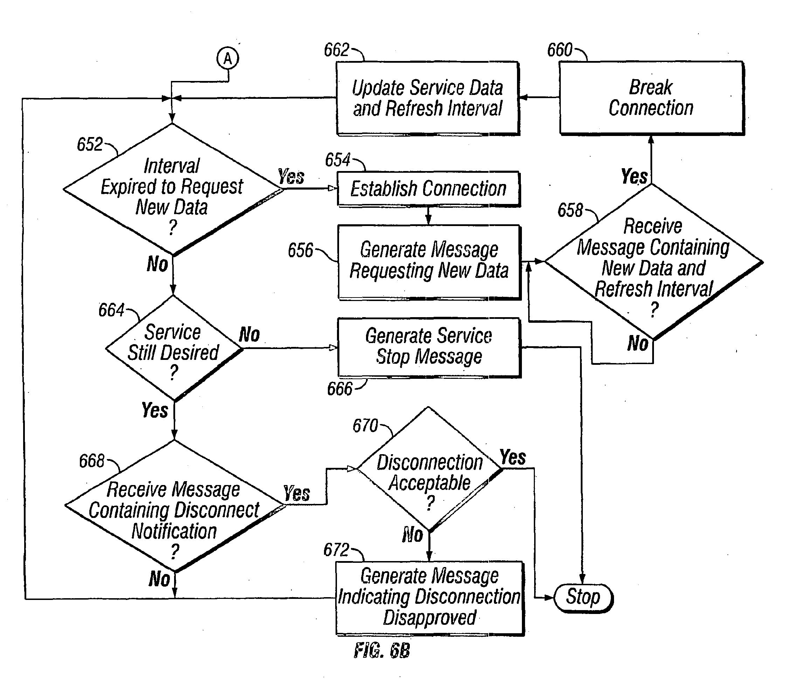

FIGs. 6A-B illustrate a process 600 for selectively managing data conveyance between computing devices. Process 600 may be implemented by a device similar to data acquisition device 110 in FIG. 1.

The process begins with waiting to determine that data is desired by a process at decision block 604. A process may include a user command indicating that a certain type of data is desired, an application that requires data, or any other appropriate scheme that can utilize data.

Once data is desired, the process calls for generating a message including a subscription request at function block 608. The subscription request may contain information regarding the type of data that is desired, the source of the data, the requesting user, and/or any other appropriate information regarding the desired data. The message may then be sent to a data distribution device.

The process then calls for waiting to receive a message regarding the service selected for providing the data at decision block 612. After such a message has been received, the process calls for determining whether the selected service is a data pull service at decision block 616.

If the selected service is not a data pull service, the process calls for establishing a persistent connection at function block 620 and determining whether a message containing new data has been received at decision block 624. If new data has been received, the process calls for updating the data for the service at function block 628.

After updating the service data, or if new data has not been received, the process calls for determining whether the service is still desired. The service may not still be desired, for example, if a predetermined amount of data has been received, if a user has not interacted with the data in a predetermined period of time, if a command indicating that the service is no longer desired is detected, or otherwise. If the service is not still desired, the process calls for generating a message indicating that the service may be stopped at function block 636. The message may then be sent to the serving data distribution device, and the process is at an end.

If, however, the service is still desired, the process continues with determining whether a message containing a disconnect notification has been received at decision block 640. If a disconnect notification has not been received, the process calls for returning to decision block 624 to check for more new data. If, however, a disconnect notification has been received, the process calls for determining whether disconnection is acceptable at decision block 644. Disconnection may be acceptable, for example, if the data is no longer desired. If disconnection is not acceptable, the process calls for generating a message indicating that disconnection is disapproved at function block 648. The message may then be sent to the serving data distribution device. The process then calls for returning to decision block 624 to check for more data. If, however, disconnection is acceptable, the process is at an end.

Returning to decision block 616, if the service is a data pull service, the process calls for determining whether time has expired to request new data at decision block 652. The time interval for requesting new data may have arrived in the message regarding the selected service. If the time to request new data has expired, the process calls for establishing a connection with the serving data distribution device at function block 654 and generating a message requesting new data at function block 656. The message may then be sent to the serving data distribution device.

The process then calls for waiting to receive a message containing new data and a new refresh interval at decision block 658. After receiving the message, the process calls for breaking the connection at function block 660 and updating the data for the service and the refresh interval at function block 662. The process then calls for returning to decision block 652 to determine whether the time to request new data has expired.

If, however, the time to request new data has not expired, the process calls for determining whether the service is still desired at decision block 664. If the service is not still desired, the process calls for generating a service stoppage message at function block 666. The message may then be sent to the serving data distribution device, and the process is at an end.

If, however, the service is still desired, the process calls for determining whether a message containing a disconnect notification has been received at decision block 668. If a disconnect notification has not been received, the process calls for returning to decision block 652 to determine whether the time to request new data has expired. If, however, a disconnect notification has been received, the process calls for determining whether disconnection is acceptable at decision block 670. If disconnection is not acceptable, the process calls for generating a message indicating disconnection disapproval at function block 672. The message may then be sent to the serving data distribution device. The process then calls for returning to decision block 652. If, however, disconnection is acceptable, the process is at an end.

Although FIGs. 6A-B illustrate a process for selectively managing data conveyance between computing devices, other implementations may have less, more, and/or a different arrangement of operations. For example, a process may not contain the operations regarding the push data service. As another example, a process may not check for disconnect notifications. As a further example, the refresh interval may not be updated. As an additional example, checking for time expiration, for whether a service is still desired, and/or for a disconnect notification may occur in any order or may not occur at all. As another example, a process may determine whether an acknowledge request has been received and, if an acknowledge request has been received, generate a response to the acknowledge request. The acknowledge request could be received before receiving the message regarding the selected service (i.e., before block 612), during data service (i.e., after block 620 or block 652), or at any other appropriate time.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user by an output device can be any form of sensory feedback (e.g., visual feedback, auditory feedback, or tactile feedback); and input from the user can be received in any form, including acoustic, speech, or tactile input.

The systems and techniques described here can be implemented in a computing system that includes a back-end component (e.g., as a data server), or that includes a middleware component (e.g., an application server), or that includes a front-end component (e.g., a client computer having a graphical user interface or a Web browser through which a user can interact with an implementation of the systems and techniques described here), or any combination of such back-end, middleware, or front-end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally data acquisition from each other and typically interact through a communication network. The relationship of client and server arises by virtue of computer programs running on the respective computers and having a client-server relationship to each other.

Other embodiments may be within the scope of the following claims.

**Claims**

1. A method performed at a data distribution device (300), the method comprising:

   - receiving (504) a message comprising a subscription request for a data acquisition device (120, 200);
   - determining (508) an attribute of the subscription request;
   - selecting (512), based on a state of the data distribution device (130, 300) upon receiving the subscription request and the attribute of the subscription request, between a data pull service and a data push service for providing the responsive data; and
   - sending a message regarding the selected service,

   the method **characterized in that** the state of the data distribution device (130, 300) depends on a number of persistent connections available at the data distribution device (130, 300), and/or the amount of data being handled by the data distribution device, and/or the number of data acquisition devices being served by the data distribution device (130, 300).

2. The method of claim 1, wherein an attribute of the subscription request comprises an attribute of data responsive to the subscription request.

**3.** The method of claim 2, wherein an attribute of data responsive to the subscription request comprises one of quality of service for the data, an estimated availability frequency of the data, and an estimated amount of the data.

**4.** The method of claim1, further comprising:

- if the selected service comprises a data pull service, determining (516) a refresh interval; and
- inserting (552) the refresh interval in the message regarding the selected service.

**5.** The method of claim 4, wherein determining (516) a refresh interval comprises analyzing a frequency at which the responsive data is expected to become available at the data distribution device (130, 300), an amount of the responsive data that is expected to become available at the data distribution device (130, 300), and an amount of overhead in setting up and breaking a connection.

**6.** The method of claim 1, further comprising:

- determining (532) whether new data is available;
- if new data is available, determining (536) whether the data is responsive to the subscription request; and
- if the data is responsive to the subscription request, determining (544) a refresh interval.

**7.** The method of claim 6, further comprising:

- determining (548) whether a message requesting new data has been received; and
- if the message has been received, sending (552) a message comprising the responsive new data and the refresh interval.

**8.** The method of claim 1, further comprising:

- if the selected service comprises a data push service, determining (578) whether new data is available;
- if new data is available, determining (584) whether the data is responsive to the subscription request; and
- if the data is responsive to the subscription request, sending a message comprising the data.

**9.** The method of claim 1, further comprising:

- tracking (576, 583) an amount of time since last receiving responsive new data; and
- if a predefined amount of time has expired, send (588) a message comprising a disconnect notification.

**10.** The method of claim 1, further comprising:

- determining (580) whether a message indicating that the selected service should be stopped has been received; and
- if a service stop message has been received, releasing (582) resources for the service.

**11.** The method of claim 1, further comprising:

- sending a message comprising an acknowledge request; and
- determining whether a response to the acknowledge request has been received.

**12.** The method of claim 11, further comprising deciding to use a data pull service if a response to the acknowledge request has not been received.

**13.** A system comprising:

- a data distribution device (130, 300) comprising:

- a communication network interface (330) operable to receive a message comprising a subscription request for a data acquisition device (110, 200); and
- a processor (320) operable to:

- determine an attribute of the subscription request,
- select, based on a state of the data distribution device (130, 300) upon receiving the subscription request and the attribute of the subscription request, between a data pull service and a data push service for providing the responsive data; and
- generate a message regarding the selected service,

the system **characterized in that** the state of the data distribution device (130, 300) depends on a number of persistent connections available at the data distribution device (130, 300), and/or the amount of data being handled by the data distribution device (130, 300), and/or the number of data acquisition devices being served by the data distribution device (130, 300).

14. The system of claim 13, wherein the processor (320) is further operable to:

- if the selected service comprises a data pull service, determine a refresh interval; and
- insert the refresh interval in the message regarding the selected service.

15. The system of claim 13, wherein the processor (320) is further operable to:

- determine whether new data is available;
- if new data is available, determine whether the data is responsive to the subscription request; and
- if the data is responsive to the subscription request, determine a refresh interval.

16. The system of claim 15, wherein the processor (320) is further operable to:

- determine whether a message requesting data has been received; and
- if the message has been received, generate a message comprising the responsive new data and the refresh interval.

17. The system of claim 13, wherein the processor (320) is further operable to:

- if the selected service comprises a data push service, determine whether new data is available;
- if new data is available, determine whether the data is responsive to the subscription request; and
- if the data is responsive to the subscription request, generate a message comprising the data.

18. The system of claim 14, wherein the data distribution device (130, 300) comprises a server.

19. The system of claim 13, wherein the processor (320) is further operable to:

- generate a message comprising an acknowledge request; and
- determine whether a response to the acknowledge request has been received.

20. The system of claim 19, wherein the processor (320) is further operable to decide to use a data pull service if a response to the acknowledge request has not been received.

21. An article comprising a machine-readable medium storing instructions operable to cause one or more machines to perform operations comprising:

- determining whether a message comprising a subscription request for a data acquisition device has been received at a data distribution device (130, 300);
- determining an attribute of the subscription request;
- selecting, based on a state of the data distribution device (130, 300) upon receiving the subscription request and the attribute of the subscription request, between a data pull service and a data push service for providing the responsive data; and
- generating a message regarding the selected service,

the article **characterized in that** the state of the data distribution device (130, 300) depends on a number of persistent connections available at the data distribution device (130, 300), and/or the amount of data being handled by the data distribution device, and/or the number of data acquisition devices being served by the data distribution device (130, 300).

**22.** The article of claim 21, wherein the instructions are operable to analyze a number of connections available at the data distribution device, a quality of service desired for the responsive data, and network latency to select a type of service.

**23.** The article of claim 21, wherein the instructions are further operable to cause one or more machines to perform operations comprising:

- if the selected service comprises a data pull service, determining a refresh interval and
- inserting the refresh interval in the message regarding the selected service.

**24.** The article of claim 21, wherein the instructions are further operable to cause one or more machines to perform operations comprising:

- determining whether new data is available;
- if new data is available, determining whether the data is responsive to the subscription request; and
- if the data is responsive to the subscription request, determining a refresh interval.

**25.** The article of claim 24, wherein the instructions are further operable to cause one or more machines to perform operations comprising:

- determining whether a message requesting data has been received; and
- if the message has been received, generating a message comprising the responsive new data and the refresh interval.

**26.** The article of claim 21, wherein the instructions are further operable to cause one or more machines to perform operations comprising:

- if the selected service comprises a data push service, determining whether new data is available;
- if new data is available, determining whether the data is responsive to the subscription request; and
- if the data is responsive to the subscription request, generating a message comprising the data.

**27.** The article of claim 21, wherein the instructions are further operable to cause one or more machines to perform operations comprising:

- generating a message comprising an acknowledge request; and
- determining whether a response to the acknowledge request has been received.

**28.** The article of claim 27, wherein the instructions are further operable to cause one or more machines to perform operations comprising deciding to use a data pull service if a response to the acknowledge request has not been received.

**Patentansprüche**

**1.** Verfahren, das an einer Datenverteilungsvorrichtung (300) durchgeführt wird, wobei das Verfahren umfasst:

- Empfangen (504) einer Nachricht, die eine Subskriptionsanfrage für eine Datenerfassungsvorrichtung (120, 200) umfasst;
- Bestimmen (508) eines Attributs der Subskriptionsanfrage;
- nach dem Empfang der Subskriptionsanfrage und des Attributs der Subskriptionsanfrage basierend auf einem Zustand der Datenverteilungsvorrichtung (130, 300) Auswählen (512) zwischen einem Datenabrufdienst (data pull) und einem Datenzustellungsdienst (data push) zum Bereitstellen der darauf ansprechenden Daten; und
- Senden einer Nachricht in Bezug auf den ausgewählten Dienst,

wobei das Verfahren **dadurch gekennzeichnet ist, dass** der Zustand der Datenverteilungsvorrichtung (130, 300) von einer Anzahl von beständigen Verbindungen abhängt, die an der Datenverteilungsvorrichtung (130, 300) verfügbar ist, und/oder der Menge von Daten, die von der Datenverteilungsvorrichtung abgewickelt werden, und/oder der Anzahl von Datenerfassungsvorrichtungen, die von der Datenverteilungsvorrichtung (130, 300) betreut werden.

**2.** Verfahren nach Anspruch 1, wobei ein Attribut der Subskriptionsanfrage ein Datenattribut umfasst, das auf die Subskriptionsanfrage anspricht.

**3.** Verfahren nach Anspruch 2, wobei ein Datenattribut, das auf die Subskriptionsanfrage anspricht, die Dienstqualität für die Daten oder eine geschätzte Verfügbarkeitshäufigkeit der Daten oder eine geschätzte Datenmenge umfasst.

**4.** Verfahren nach Anspruch 1, das ferner umfasst:

- wenn der ausgewählte Dienst einen Datenabrufdienst umfasst, Bestimmen (516) eines Auffrischintervalls; und
- Einsetzen (552) des Auffrischintervalls in die Nachricht in Bezug auf den ausgewählten Dienst.

**5.** Verfahren nach Anspruch 4, wobei das Bestimmen (516) eines Auffrischintervalls das Analysieren einer Häufigkeit, mit der erwartet wird, dass die ansprechenden Daten an der Datenverteilungsvorrichtung (130, 300) verfügbar werden, einer Menge der ansprechenden Daten, deren Verfügbarwerden an der Datenverteilungsvorrichtung (130, 300) erwartet wird, und einer Menge an Overhead beim Aufbauen und Abbrechen einer Verbindung umfasst.

**6.** Verfahren nach Anspruch 1, das ferner umfasst:

- Bestimmen (532), ob neue Daten verfügbar sind;
- wenn neue Daten verfügbar sind, Bestimmen (536), ob die Daten ansprechend auf die Subskriptionsanfrage sind; und
- wenn die Daten ansprechend auf die Subskriptionsanfrage sind, Bestimmen (544) eines Auffrischintervalls.

**7.** Verfahren nach Anspruch 6, das ferner umfasst:

- Bestimmen (548), ob eine Nachricht, die neue Daten anfordert, empfangen wurde; und
- wenn die Nachricht empfangen wurde, Senden (552) einer Nachricht, welche die ansprechenden neuen Daten und das Auffrischintervall umfasst.

**8.** Verfahren nach Anspruch 1, das ferner umfasst:

- wenn der ausgewählte Dienst einen Datenzustellungsdienst umfasst, Bestimmen (578), ob neue Daten verfügbar sind;
- wenn neue Daten verfügbar sind, Bestimmen (584), ob die Daten auf die Subskriptionsanfrage ansprechend sind; und
- wenn die Daten auf die Subskriptionsanfrage ansprechend sind, Senden einer Nachricht, welche die Daten umfasst.

**9.** Verfahren nach Anspruch 1, das ferner umfasst:

- Verfolgen (576, 583) eines Zeitbetrags seit dem letzten Empfang ansprechender neuer Daten; und
- wenn ein vordefinierter Zeitbetrag vergangen ist, Senden (588) einer Nachricht, die eine Trennungsbenachrichtigung umfasst.

**10.** Verfahren nach Anspruch 1, das ferner umfasst:

Bestimmen (580), ob eine Nachricht, die anzeigt, dass der ausgewählte Dienst beendet werden sollte, empfangen wurde; und

- wenn eine Dienstbeendigungsnachricht empfangen wurde, Freigeben (582) von Ressourcen für den Dienst.

**11.** Verfahren nach Anspruch 1, das ferner umfasst:

- Senden einer Nachricht, die eine Quittungsanforderung umfasst; und

- Bestimmen, ob eine Antwort auf die Quittungsanforderung empfangen wurde.

12. Verfahren nach Anspruch 11, das ferner die Entscheidung umfasst, einen Datenabrufdienst zu verwenden, wenn keine Antwort auf die Quittungsanforderung empfangen wurde.

13. System, das umfasst:

- eine Datenverteilungsvorrichtung (130, 300), die umfasst:
- eine Kommunikationsnetzschnittstelle (330), die betreibbar ist, um eine Nachricht zu empfangen, die eine Subskriptionsanfrage für eine Datenerfassungsvorrichtung (110, 200) umfasst; und
- einen Prozessor (320), der betreibbar ist, um

- ein Attribut der Subskriptionsanfrage zu bestimmen,
- nach dem Empfangen der Subskriptionsanfrage und des Attributs der Subskriptionsanfrage basierend auf einem Zustand der Datenverteilungsvorrichtung (130, 300) zwischen einem Datenabrufdienst und einem Datenzustellungsdienst auszuwählen; und
- eine Nachricht in Bezug auf den ausgewählten Dienst zu erzeugen,

wobei das System **dadurch gekennzeichnet ist, dass** der Zustand der Datenverteilungsvorrichtung (130, 300) von einer Anzahl von beständigen Verbindungen abhängt, die an der Datenverteilungsvorrichtung (130, 300) verfügbar ist, und/oder der Menge von Daten, die von der Datenverteilungsvorrichtung (130, 300) abgewickelt werden, und/oder der Anzahl von Datenerfassungsvorrichtungen, die von der Datenverteilungsvorrichtung (130, 300) betreut werden.

14. System nach Anspruch 13, wobei der Prozessor (320) ferner betreibbar ist, um:

- wenn der ausgewählte Dienst einen Datenabrufdienst umfasst, ein Auffrischintervall zu bestimmen; und
- das Auffrischintervall in die den ausgewählten Dienst betreffende Nachricht einzusetzen.

15. System nach Anspruch 13, wobei der Prozessor (320) ferner betreibbar ist, um:

- zu bestimmen, ob neue Daten verfügbar sind;
- wenn neue Daten verfügbar sind, zu bestimmen, ob die Daten ansprechend auf die Subskriptionsanfrage sind; und
- wenn die Daten ansprechend auf die Subskriptionsanfrage sind, ein Auffrischintervall zu bestimmen.

16. System nach Anspruch 15, wobei der Prozessor (320) ferner betreibbar ist, um:

- zu bestimmen, ob eine Nachricht, die neue Daten anfordert, empfangen wurde; und
- wenn die Nachricht empfangen wurde, eine Nachricht zu erzeugen, welche die ansprechenden neuen Daten und das Auffrischintervall umfasst.

17. System nach Anspruch 13, wobei der Prozessor (320) ferner betreibbar ist, um:

- wenn der ausgewählte Dienst einen Datenzustellungsdienst umfasst, zu bestimmen, ob neue Daten verfügbar sind;
- wenn neue Daten verfügbar sind, zu bestimmen, ob die Daten auf die Subskriptionsanfrage ansprechend sind; und
- wenn die Daten auf die Subskriptionsanfrage ansprechend sind, eine Nachricht zu erzeugen, welche die Daten umfasst.

18. System nach Anspruch 14, wobei die Datenverteilungsvorrichtung (130, 300) einen Server umfasst.

19. System nach Anspruch 13, wobei der Prozessor (320) ferner betreibbar ist, um:

- eine Nachricht zu erzeugen, die eine Quittungsanforderung umfasst; und
- zu bestimmen, ob eine Antwort auf die Quittungsanforderung empfangen wurde.

20. System nach Anspruch 19, wobei der Prozessor (320) ferner betreibbar ist, um die Verwendung eines Datenabrufdienstes zu bestimmen, wenn keine Antwort auf die Quittungsanforderung empfangen wurde

21. Artikel, der ein maschinenlesbares Medium umfasst, welches Anweisungen speichert, die betreibbar sind, um eine oder mehrere Maschinen zu veranlassen, Arbeitsschritte durchzuführen, welche umfassen:

- Bestimmen, ob eine Nachricht, die eine Subskriptionsanfrage für eine Datenerfassungsvorrichtung umfasst, an einer Datenverteilungsvorrichtung (130, 300) empfangen wurde;
- Bestimmen eines Attributs der Subskriptionsanfrage;
- nach dem Empfangen der Subskriptionsanfrage und des Attributs der Subskriptionsanfrage basierend auf einem Zustand der Datenverteilungsvorrichtung (130, 300) Auswählen zwischen einen Datenabrufdienst und einem Datenzustellungsdienst; und
- Erzeugen einer Nachricht in Bezug auf den ausgewählten Dienst,

wobei der Artikel **dadurch gekennzeichnet ist, dass** der Zustand der Datenverteilungsvorrichtung (130, 300) von einer Anzahl von beständigen Verbindungen abhängt, die an der Datenverteilungsvorrichtung (130, 300) verfügbar ist, und/oder der Menge von Daten, die von der Datenverteilungsvorrichtung abgewickelt werden, und/oder der Anzahl von Datenerfassungsvorrichtungen, die von der Datenverteilungsvorrichtung (130, 300) betreut werden.

22. Artikel nach Anspruch 21, wobei die Anweisungen betreibbar sind, um eine Anzahl von Verbindungen, die an der Datenverteilungsvorrichtung verfügbar ist, eine Dienstqualität, die für die ansprechenden Daten erwünscht ist, und eine Netzwerklatenz zu analysieren, um einen Diensttyp auszuwählen.

23. Artikel nach Anspruch 21, wobei die Anweisungen ferner betreibbar sind, um eine oder mehrere Maschinen zu veranlassen, Arbeitsschritte durchzuführen, die umfassen:

- wenn der ausgewählte Dienst einen Datenabrufdienst umfasst, Bestimmen eines Auffrischintervalls; und
- Einsetzen des Auffrischintervalls in die den ausgewählten Dienst betreffende Nachricht.

24. Artikel nach Anspruch 21, wobei die Anweisungen ferner betreibbar sind, um eine oder mehrere Maschinen zu veranlassen, Arbeitsschritte durchzuführen, die umfassen:

- Bestimmen, ob neue Daten verfügbar sind;
- wenn neue Daten verfügbar sind, Bestimmen, ob die Daten ansprechend auf die Subskriptionsanfrage sind; und
- wenn die Daten ansprechend auf die Subskriptionsanfrage sind, Bestimmen eines Auffrischintervalls.

25. Artikel nach Anspruch 24, wobei die Anweisungen ferner betreibbar sind, um eine oder mehrere Maschinen zu veranlassen, Arbeitsschritte durchzuführen, die umfassen:

- Bestimmen, ob eine Nachricht, die neue Daten anfordert, empfangen wurde; und
- wenn die Nachricht empfangen wurde, Erzeugen einer Nachricht, welche die ansprechenden neuen Daten und das Auffrischintervall umfasst.

26. Artikel nach Anspruch 21, wobei die Anweisungen ferner betreibbar sind, um eine oder mehrere Maschinen zu veranlassen, Arbeitsschritte durchzuführen, die umfassen:

- wenn der ausgewählte Dienst einen Datenzustellungsdienst umfasst, Bestimmen, ob neue Daten verfügbar sind;
- wenn neue Daten verfügbar sind, Bestimmen, ob die Daten auf die Subskriptionsanfrage ansprechend sind; und
- wenn die Daten auf die Subskriptionsanfrage ansprechend sind, Erzeugen einer Nachricht, welche die Daten umfasst.

27. Artikel nach Anspruch 21, wobei die Anweisungen ferner betreibbar sind, um eine oder mehrere Maschinen zu veranlassen, Arbeitsschritte durchzuführen, die umfassen:

- Erzeugen einer Nachricht, die eine Quittungsanforderung umfasst; und
- Bestimmen, ob eine Antwort auf die Quittungsanforderung empfangen wurde.

**28.** Artikel nach Anspruch 21, wobei die Anweisungen ferner betreibbar sind, um eine oder mehrere Maschinen zu veranlassen, Arbeitsschritte durchzuführen, welche die Entscheidung umfassen, einen Datenabrufdienst zu verwenden, wenn keine Antwort auf die Quittungsanforderung empfangen wurde.

**Revendications**

**1.** Procédé accompli sur un périphérique de distribution de données (300), le procédé comprenant :

- la réception (504) d'un message qui comprend une demande d'abonnement pour un périphérique d'acquisition de données (120, 200) ;
- la détermination (508) d'un attribut de la demande d'abonnement ;
- la sélection (512), sur la base d'un état du périphérique de distribution de données (130, 300) suite à la réception de la demande d'abonnement et de l'attribut de la demande d'abonnement, entre un service de données en mode « pull » et un service de données en mode « push » afin de fournir les données sensibles ; et
- l'envoi d'un message qui concerne le service sélectionné ;

le procédé étant **caractérisé en ce que** l'état du périphérique de distribution de données (130, 300) dépend d'un nombre de connexions persistantes disponibles sur le périphérique de distribution de données (130, 300), et/ou de la quantité de données qui sont traitées par le périphérique de distribution de données, et/ou du nombre de périphériques d'acquisition de données qui sont desservis par le périphérique de distribution de données (130, 300).

**2.** Procédé selon la revendication 1, dans lequel un attribut de la demande d'abonnement comprend un attribut des données sensibles à la demande d'abonnement.

**3.** Procédé selon la revendication 2, dans lequel un attribut des données sensibles à la demande d'abonnement comprend un composant parmi la qualité du service pour les données, une fréquence de disponibilité estimée des données, et une quantité estimée des données.

**4.** Procédé selon la revendication 1, comprenant en outre :

- la détermination (516) d'un intervalle de rafraîchissement si le service sélectionné comprend un service de données en mode « pull » ; et
- l'insertion (552) de l'intervalle de rafraîchissement dans le message qui concerne le service sélectionné.

**5.** Procédé selon la revendication 4, dans lequel la détermination (516) d'un intervalle de rafraîchissement comprend l'analyse d'une fréquence à laquelle les données sensibles sont supposées devenir disponibles sur le périphérique de distribution de données (130, 300), d'une quantité de données sensibles qui sont supposées devenir disponibles sur le périphérique de distribution de données (130, 300), et d'une quantité de trafic de service dans la régulation et l'interruption d'une connexion.

**6.** Procédé selon la revendication 1, comprenant en outre :

- la détermination (532) si de nouvelles données sont disponibles ;
- si de nouvelles données sont disponibles, la détermination (536) si les données sont sensibles à la demande d'abonnement ; et
- si les données sont sensibles à la demande d'abonnement, la détermination (544) d'un intervalle de rafraîchissement.

**7.** Procédé selon la revendication 6, comprenant en outre :

- la détermination (548) si un message qui demande de nouvelles données a été reçu ; et
- si le message a été reçu, l'envoi (552) d'un message qui comprend les nouvelles données sensibles et l'intervalle de rafraîchissement.

**8.** Procédé selon la revendication 1, comprenant en outre :

- si le service sélectionné comprend un service de données en mode « push », la détermination (578) si de nouvelles données sont disponibles ;
- si de nouvelles données sont disponibles, la détermination (584) si les données sont sensibles à la demande d'abonnement ; et
- si les données sont sensibles à la demande d'abonnement, l'envoi d'un message qui comprend les données.

**9.** Procédé selon la revendication 1, comprenant en outre :

- le suivi (576, 583) d'une quantité de temps depuis la dernière réception des nouvelles données sensibles ; et
- si une quantité de temps prédéterminée s'est expirée, l'envoi (588) d'un message qui comprend une notification de déconnexion.

**10.** Procédé selon la revendication 1, comprenant en outre :

- la détermination (580) si un message qui indique que le service sélectionné devrait être stoppé a été reçu ; et
- si un message de stop du service a été reçu, la libération (582) des ressources pour le service.

**11.** Procédé selon la revendication 1, comprenant en outre :

- l'envoi d'un message qui comprend une demande d'accusé de réception ; et
- la détermination si une réponse à la demande d'accusé de réception a été reçue.

**12.** Procédé selon la revendication 11, comprenant en outre la décision d'utiliser un service de données en mode « pull » si une réponse à la demande d'accusé de réception n'a pas été reçue.

**13.** Système, comprenant :

- un périphérique de distribution de données (130, 300), comprenant :

- une interface de réseau de communication (330) prête à la mise en service pour recevoir un message qui comprend une demande d'abonnement pour un périphérique d'acquisition de données (120, 200) ; et
- un processeur (320) prêt à la mise en service pour :

- déterminer un attribut de la demande d'abonnement :
- sélectionner, sur la base d'un état du périphérique de distribution de données (130, 300) suite à la réception de la demande d'abonnement et de l'attribut de la demande d'abonnement, entre un service de données en mode « pull » et un service de données en mode « push » afin de fournir les données sensibles ; et
- générer un message qui concerne le service sélectionné,

le système étant **caractérisé en ce que** l'état du périphérique de distribution de données (130, 300) dépend d'un nombre de connexions persistantes disponibles sur le périphérique de distribution de données (130, 300), et/ou de la quantité de données qui sont traitées par le périphérique de distribution de données, et/ou du nombre de périphériques d'acquisition de données qui sont desservis par le périphérique de distribution de données (130, 300).

**14.** Système selon la revendication 13, dans lequel le processeur (320) est en outre prêt à la mise en service pour :

- déterminer un intervalle de rafraîchissement si le service sélectionné comprend un service de données en mode « pull » ; et
- insérer l'intervalle de rafraîchissement dans le message qui concerne le service sélectionné.

**15.** Système selon la revendication 13, dans lequel le processeur (320) est en outre prêt à la mise en service pour :

- déterminer si de nouvelles données sont disponibles ;
- si de nouvelles données sont disponibles, déterminer si les données sont sensibles à la demande d'abonnement ; et
- si les données sont sensibles à la demande d'abonnement, déterminer un intervalle de rafraîchissement.

**16.** Système selon la revendication 15, dans lequel le processeur (320) est en outre prêt à la mise en service pour :

- déterminer si un message de demande de données a été reçu ; et
- si le message a été reçu, générer un message qui comprend les nouvelles données sensibles et l'intervalle de rafraîchissement.

**17.** Système selon la revendication 13, dans lequel le processeur (320) est en outre prêt à la mise en service pour :

- si le service sélectionné comprend un service de données en mode « push », déterminer si de nouvelles données sont disponibles ;
- si de nouvelles données sont disponibles, déterminer si les données sont sensibles à la demande d'abonnement ; et
- si les données sont sensibles à la demande d'abonnement, générer un message qui comprend les données.

**18.** Système selon la revendication 14, dans lequel le périphérique de distribution de données (130, 300) comprend un serveur.

**19.** Système selon la revendication 13, dans lequel le processeur (320) est en outre prêt à la mise en service pour :

- générer un message qui comprend une demande d'accusé de réception ; et
- déterminer si une réponse à la demande d'accusé de réception a été reçue.

**20.** Système selon la revendication 19, dans lequel le processeur (320) est en outre prêt à la mise en service pour décider d'utiliser un service de données en mode « pull » si une réponse à la demande d'accusé de réception n'a pas été reçue.

**21.** Article comprenant un support lisible par une machine et qui mémorise des instructions prêtes à la mise en service pour provoquer qu'une machine accomplisse ou que plusieurs machines accomplissent des opérations comprenant :

- la détermination si un message qui comprend une demande d'abonnement pour un périphérique d'acquisition de données a été reçu sur un périphérique de distribution de données (130, 300) ;
- la détermination d'un attribut de la demande d'abonnement ;
- la sélection, sur la base d'un état du périphérique de distribution de données (130, 300) suite à la réception de la demande d'abonnement et de l'attribut de la demande d'abonnement, entre un service de données en mode « pull » et un service de données en mode « push » afin de fournir les données sensibles ; et
- la génération d'un message qui concerne le service sélectionné,

l'article étant **caractérisé en ce que** l'état du périphérique de distribution de données (130, 300) dépend d'un nombre de connexions persistantes disponibles sur le périphérique de distribution de données (130, 300), et/ou de la quantité de données qui sont traitées par le périphérique de distribution de données, et/ou du nombre de périphériques d'acquisition de données qui sont desservis par le périphérique de distribution de données (130, 300).

**22.** Article selon la revendication 21, dans lequel les instructions sont prêtes à la mise en service pour analyser un nombre de connexions disponibles sur le périphérique de distribution de données, une qualité de service désirée pour les données sensibles, et un temps d'attente du réseau afin de sélectionner un type de service.

**23.** Article selon la revendication 21, dans lequel les instructions sont en outre prêtes à la mise en service pour provoquer qu'une machine accomplisse ou que plusieurs machines accomplissent des opérations comprenant :

- la détermination d'un intervalle de rafraîchissement si le service sélectionné comprend un service de données en mode « pull » ; et
- l'insertion de l'intervalle de rafraîchissement dans le message qui concerne le service sélectionné.

**24.** Article selon la revendication 21, dans lequel les instructions sont en outre prêtes à la mise en service pour provoquer qu'une machine accomplisse ou que plusieurs machines accomplissent des opérations comprenant :

- la détermination si de nouvelles données sont disponibles ;
- si de nouvelles données sont disponibles, la détermination si les données sont sensibles à la demande d'abonnement ; et
- si les données sont sensibles à la demande d'abonnement, la détermination d'un intervalle de rafraîchissement.

**25.** Article selon la revendication 24, dans lequel les instructions sont en outre prêtes à la mise en service pour provoquer qu'une machine accomplisse ou que plusieurs machines accomplissent des opérations comprenant :

- la détermination si un message qui demande de nouvelles données a été reçu ; et
- si le message a été reçu, la génération d'un message qui comprend les nouvelles données sensibles et l'intervalle de rafraîchissement

**26.** Article selon la revendication 21, dans lequel les instructions sont en outre prêtes à la mise en service pour provoquer qu'une machine accomplisse ou que plusieurs machines accomplissent des opérations comprenant :

- si le service sélectionné comprend un service de données en mode « push », la détermination si de nouvelles données sont disponibles ;
- si de nouvelles données sont disponibles, la détermination si les données sont sensibles à la demande d'abonnement ; et
- si les données sont sensibles à la demande d'abonnement, la génération d'un message qui comprend les données.

**27.** Article selon la revendication 21, dans lequel les instructions sont en outre prêtes à la mise en service pour provoquer qu'une machine accomplisse ou que plusieurs machines accomplissent des opérations comprenant :

- la génération d'un message qui comprend une demande d'accusé de réception ; et
- la détermination si une réponse à la demande d'accusé de réception a été reçue.

**28.** Article selon la revendication 27, dans lequel les instructions sont en outre prêtes à la mise en service pour provoquer qu'une machine accomplisse ou que plusieurs machines accomplissent des opérations comprenant la décision d'utiliser un service de données en mode « pull » si une réponse à la demande d'accusé de réception n'a pas été reçue.

**FIG. 1**

**FIG. 2**

*FIG. 3*

**FIG. 4**

FIG. 5A

EP 1 634 426 B1

Ⓐ

572 — Generate Message Regarding Push Service

574 — Establish Connection

576 — Begin Tracking Time

578 — New Data Available ?

Yes

No

580 — Receive Service Stop Message ?

Yes

No

583 — Time Expired ?

Yes

No

586 — Generate Message with Responsive New Data

584 — Responsive to Subscription Request ?

Yes

No

582 — Release Resources

Stop

590 — Receive Disapproval Response ?

Yes

No

588 — Generate Message Containing Disconnect Notification

*FIG. 5B*

EP 1 634 426 B1

Start

604 Data Desired ? — No

Yes

608 Generate Message Including Subscription Request

612 Receive Message Regarding Selected Service ? — No

Yes

616 Pull Service ? — No → 620 Establish Persistent Connection

Yes → Ⓐ

636 Generate Service Stop Message → Stop

No

632 Service Still Desired ? — Yes

628 Update Existing Service Data

Yes

624 Receive Message Including New Data ? — No

600

Stop

640 Receive Message Containing Disconnect Notification ? — No

Yes

644 Disconnection Acceptable ? — Yes

No

648 Generate Message Indicating Disconnection Disapproved

*FIG. 6A*

(A)

662 — Update Service Data and Refresh Interval

660 — Break Connection

652 — Interval Expired to Request New Data ? — **Yes** → 654 — Establish Connection

**No**

656 — Generate Message Requesting New Data

658 — Receive Message Containing New Data and Refresh Interval ? — **Yes**

**No**

664 — Service Still Desired ? — **No** → Generate Service Stop Message — 666

**Yes**

668 — Receive Message Containing Disconnect Notification ? — **Yes** → 670 — Disconnection Acceptable ? — **Yes**

**No**

**No** → 672 — Generate Message Indicating Disconnection Disapproved

Stop

FIG. 6B

**EP 1 634 426 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5862325 A